# EUROPÄISCHE PATENTSCHRIFT

(11) **EP 1 485 195 B1**
(45) Veröffentlichungstag und Bekanntmachung des Hinweises auf die Patenterteilung: **16.11.2005**
(21) Anmeldenummer: 03706482.1
(22) Anmeldetag: 12.02.2003
(51) Int. Cl.: B01J 8/00, B01J 8/06, B01J 19/00, B01J 12/00, C01B 31/28

(54) **VERFAHREN ZUR HERSTELLUNG VON PHOSGEN**
METHOD FOR PRODUCING PHOSGENE
PROCEDE DE PRODUCTION DE PHOSGENE

(30) Priorität: 27.02.2002 DE 10208398
(43) Veröffentlichungstag der Anmeldung: 15.12.2004
(73) Patentinhaber: BASF Aktiengesellschaft, 67056 Ludwigshafen (DE)
(72) Erfinder: OLBERT, Gerhard, 69221 Dossenheim (DE); MATTKE, Torsten, 67251 Freinsheim (DE); VANDERWAEREN, Luc, B-2260 Westerlo (BE); NEVEJANS, Filip, B-9170 St. Gillis-Waas (BE); HAMMENECKER, Jan, B-2870 Puurs (BE)
(74) Vertreter: Isenbruck, Günter
(86) Internationale Anmeldenummer: PCT/EP2003/001372
(87) Internationale Veröffentlichungsnummer: WO 2003/072237

(56) Entgegenhaltungen:
- EP-A- 0 998 973
- EP-A- 1 270 065
- WO-A-02/02220
- US-A- 2 986 454
- US-A- 3 518 284
- US-A- 3 807 963
- US-A- 3 876 693
- US-A- 4 231 959

## Beschreibung

Die Erfindung betrifft ein Verfahren zur Herstellung von Phosgen durch Gasphasenreaktion von Kohlenmonoxid und Chlor in Gegenwart eines Feststoffkatalysators.

Phosgen wird großtechnisch in einer katalytischen Gasphasenreaktion von Kohlenmonoxid und Chlor in Gegenwart eines Feststoffkatalysators, bevorzugt Aktivkohle hergestellt. Die Reaktion ist stark exotherm, die Bildungsenthalpie beträgt -107,6 kJ/mol. Die Reaktion wird in der Regel in einem Rohrbündelreaktor nach dem in Ullmanns Enzyklopädie der technischen Chemie, Vol. A 19, Seite 413 bis 414 beschriebenen Verfahren, hergestellt. Danach wird der körnige Katalysator, mit einer Korngröße im Bereich von 3 bis 5 mm, in Rohren mit einem Innendurchmesser zwischen 50 und 70 mm eingesetzt. Bei 40 bis 50°C springt die Reaktion an, die Temperatur steigt in den Rohren bis auf etwa 580°C und fällt dann wieder ab. Kohlenmonoxid wird in geringem Überschuss eingesetzt, um zu gewährleisten, dass das gesamte Chlor umgesetzt wird und um chlorfreies Phosgen zu erhalten. Die Reaktion kann drucklos oder unter Druck durchgeführt werden, häufig bei 2 bis 5 bar, um das Phosgen bereits mit Kühlwasser kondensieren zu können.

Phosgen ist ein wichtiger Hilfsstoff bei der Herstellung von Zwischen- und Endprodukten in nahezu allen Zweigen der Chemie. Das mengenmäBig größte Verwendungsgebiet ist die Herstellung von Diisocyanaten für die Polyurethanchemie, insbesondere von Toluylendiisocyanat und von 4,4-Diisocyanat-diphenylmethan.

Zur besseren Abführung der Reaktionswärme über das zwischen den Kontaktrohren zirkulierende Wärmetauschmittel werden Umlenkbleche zwischen den Kontaktrohren eingebaut, die eine Queranströmung der Kontaktrohre durch das Wärmetauschmittel bewirken.

Bekannte Rohrbündelreaktoren für die Herstellung von Phosgen sind zwecks maximaler Raumausnutzung im Reaktorinnenraum vollständig berohrt. Sie weisen Umlenkbleche zwischen den Kontaktrohren auf, die relativ kurz gehalten sind, d.h. sie reichen im Umlenkbereich nicht bis zur Reaktorinnenwand, sondern lassen jeweils einen Anteil von etwa 25 bis 30 % des gesamten Reaktorquerschnitts frei, um den Druckabfall des Wärmetauschmittels und somit die Betriebskosten für die Umwälzpumpe des Wärmetauschmittels zu begrenzen. Im Umlenkbereich ändert sich das Strömungsprofil des Wärmetauschmittels um die Kontaktrohre von Queranströmung auf Längsanströmung. Die Kontaktrohre werden schlechter gekühlt, und in der Folge treten an den Kontaktrohren im Umlenkbereich Korrosionsprobleme auf.

Die US 3,807,963 beschreibt die Verwendung eines Röhrenreaktors zur Dehydrierugn von alkylierten Kohlenwasserstoffen in Gegenwart von Wasserdampf, wobei die alkylierten Kohlenwasserstoffe, speziell Ethylbenzol, gleichzeitig Edukt und Wärmeträger sind. Bei den hohen Temperaturen des beschriebenen Verfahrens, oberhalb von ca. 600 °C, liegt das Wärmetauschmittel gasförmig vor. Bei der Auslegung des Reaktors ist in solchen Fällen insbesondere der Druckabfall des Wärmetauschmittels zu berücksichtigen.

Die US 4,231,959 beschreibt ein Verfahren zur Herstellung von Phosgen unter Verwendung von zwei hintereinander geschalteten Reaktoren, wobei der erste Reaktor ein Rohrbündelreaktor ist und der zweite Reaktor ein Rohrbündelreaktor sein kann. Indem die Umsetzung in zwei hintereinander geschalteten Reaktoren durchgeführt wird, kann der Überschuss an Kohlenmonoxid, der erforderlich ist, um die nahezu vollständige Umsetzung des Chlors zu gewährleisten, gegenüber herkömmlichen Verfahren, mit Durchführung in einem einzigen Apparat, reduziert werden.

Demgegenüber war es Aufgabe der Erfindung, die Korrosionsprobleme an den Kontaktrohren im Umlenkbereich zu vermeiden und einen Reaktor zur Herstellung von Phosgen zur Verfügung zu stellen, der eine erhöhte spezifische Querschnittsbelastung ermöglicht und somit eine höhere Kapazität aufweist.

Die Lösung geht aus von einem Verfahren zur Herstellung von Phosgen durch Gasphasenreaktion von Kohlenmonoxid und Chlor in Gegenwart eines Feststoffkatalysators, in einem oder mehreren zylinderförmigen Reaktoren mit einem Bündel von parallel zueinander, in Reaktorlängsrichtung angeordneten Kontaktrohren, die an ihren Enden in Rohrböden befestigt sind, mit je einer Haube an beiden Enden des Reaktors, sowie mit senkrecht zur Reaktorlängsrichtung im Zwischenraum zwischen den Kontaktrohren angeordneten Umlenkblechen, die alternierend einander gegenüberliegende Durchtrittsöffnungen an der Reaktorinnenwand freilassen, wobei die Kontaktrohre mit dem Feststoffkatalysator befüllt sind, das gasförmige Reaktionsgemisch von einem Reaktorende über eine Haube durch die Kontaktrohre geleitet und vom entgegengesetzten Reaktorende über die zweite Haube abgezogen und durch den Zwischenraum um die Kontaktrohre ein flüssiges Wärmetauschmittel geleitet wird.

Die Erfindung ist dadurch gekennzeichnet, dass der Reaktor (die Reaktoren) im Bereich der Durchtrittsöffnungen unberohrt ist (sind).

Der Begriff Durchtrittsöffnung bezeichnet vorliegend den Bereich zwischen dem freien Ende eines Umlenkbleches und der Reaktorinnenwand.

Es wurde gefunden, dass durch die erfindungsgemäße Freilassung des Reaktorinnenraums im Bereich der Durchtrittsöffnungen die Kapazität eines Reaktors zur Herstellung von Phosgen bei unverändertem Volumen des Innenraums und erhöhter Kühlmittelmenge um den Faktor 1,5 bis 2,0 gegenüber einem vollberohrten Reaktor erhöht werden kann, obwohl eine niedrigere Gesamtzahl von Kontaktrohren im Reaktor untergebracht ist.

Es wurde darüber hinaus gefunden, dass der Reaktor zur Durchführung des erfindungsgemäßen Verfahrens zur Herstellung von Phosgen durch Gasphasenreaktion von Kohlenmonoxid und Chlor in Gegenwart eines Feststoffkatalysators auch ohne Kompensatoren zum Ausgleich von thermischen Spannungen im Reaktormantel gebaut werden kann: es wurde gefunden, dass die durch die exotherme Reaktion bedingte Temperaturerhöhung der Kontaktrohrwände nur in Teilbereichen derselben auftritt, daher über die Länge der Kontaktrohre weitgehend aufgefangen werden kann und nur noch geringe Spannungen in den Schweißnähten der Kontaktrohreinschweißungen an den Rohrböden bewirkt. Dieser Effekt nimmt mit zunehmender Länge der Kontaktrohre zu, insbesondere ab einer Länge der Kontaktrohre größer als 2,5 m. Indem auf Kompensatoren am Reaktormantel verzichtet wird, wird der Reaktor insgesamt steifer, und daher können die Rohrböden mit geringerer Dicke ausgelegt werden. Dies führt in vorteilhafter Weise zu leichteren Apparaten und darüber hinaus wird bei unveränderter Gesamtlänge des Apparates die für die Unterbringung der Katalysatorfüllung nutzbare Länge der Kontaktrohre größer, mit entsprechender Laufzeitverlängerung des Reaktors. So ist beispielsweise eine Verlängerung der Katalysatorfüllung um etwa 40 cm realisierbar, mit der Folge einer Laufzeitverlängerung des Reaktors in der Größenordnung von einem Jahr. Darüber hinaus wird der Reaktor ohne Kompensator preiswerter.

Der Reaktor ist bezüglich seiner Geometrie grundsätzlich nicht eingeschränkt. Bevorzugt ist er zylinderförmig ausgebildet, möglich sind jedoch auch Formen mit beispielsweise quadratischem oder rechteckigem Querschnitt.

Im Reaktor ist ein Bündel, das heißt eine Vielzahl von Kontaktrohren parallel zueinander in Reaktorlängsrichtung angeordnet. Die Anzahl der Kontaktrohre liegt bevorzugt im Bereich von 100 bis 10000, insbesondere von 1000 bis 3500.

Die Kontaktrohre sind aus einem korrosionsfesten Material, beispielsweise Edelstahl, bevorzugt Duplexstahl 1.4462, Edelstahl 1.4571 oder Edelstahl 1.4541 gebildet. Bevorzugt ist der gesamte Reaktor aus den vorerwähnten Werkstoffen, insbesondere aus Duplex- oder Edelstahl gebildet.

Jedes Kontaktrohr weist bevorzugt eine Wandstärke im Bereich von 2,0 bis 4,0 mm, insbesondere von 2,5 bis 3,0 mm, und einen Rohrinnendurchmesser im Bereich von 20 bis 90 mm, bevorzugt im Bereich von 30 bis 35 mm auf.

Die Kontaktrohre weisen bevorzugt eine Länge im Bereich von 1,5 bis 6,0 m, insbesondere im Bereich von 2,0 bis 3,5 m, auf.

Die Kontaktrohre sind bevorzugt derart im Reaktorinnenraum angeordnet, dass das Verhältnis zwischen dem Abstand der Mittelpunkte unmittelbar benachbarter Kontaktrohre und dem Außendurchmesser der Kontaktrohre im Bereich von 1,15 bis 1,4, bevorzugt im Bereich von 1,2 bis 1,3 liegt und dass die Kontaktrohre in Dreiecksteilung im Reaktor angeordnet sind.

Die Kontaktrohre sind an beiden Enden in Rohrböden flüssigkeitsdicht befestigt, bevorzugt verschweißt. Die Rohrböden bestehen ebenfalls aus einem korrosionsfesten Material, bevorzugt Edelstahl, insbesondere Duplexstahl, besonders bevorzugt aus dem selben Material wie die Kontaktrohre.

Der Innendurchmesser des Reaktors beträgt, sofern es sich um einen zylinderförmigen Apparat handelt, 0,5 bis 6,0 m, bevorzugt 1,0 bis 3,0 m.

Beide Reaktorenden sind nach außen durch Hauben begrenzt. Durch eine Haube erfolgt die Zuführung des Reaktionsgemisches zu den Kontaktrohren, durch die Haube am anderen Ende des Reaktors wird der Produktstrom abgezogen.

In den Hauben sind bevorzugt Gasverteiler zur Vergleichmäßigung des Gasstromes angeordnet, beispielsweise in Form einer Platte, insbesondere einer perforierten Platte.

Im Zwischenraum zwischen den Kontaktrohren sind senkrecht zur Reaktorlängsrichtung Umlenkbleche angeordnet, die alternierend einander gegenüberliegende Durchtrittsöffnungen an der Reaktorinnenwand freilassen. Die Umlenkbleche bewirken eine Umlenkung des im Reaktorinnenraum, im Zwischenraum zwischen den Kontaktrohren zirkulierenden Wärmetauschmittels, dergestalt, dass die Kontaktrohre vom Wärmetauschmittel quer angeströmt werden, wodurch die Wärmeabführung verbessert wird. Um diese vorteilhafte Queranströmung der Kontaktrohre zu erreichen, müssen die Umlenkbleche alternierend an die einander gegenüberliegenden Seiten der Reaktorinnenwand Durchtrittsöffnungen für das Wärmetauschmittel freilassen.

Die Anzahl der Umlenkbleche beträgt bevorzugt etwa 6 bis 21. Vorzugsweise sind sie äquidistant zu einander angeordnet, besonders bevorzugt ist jedoch die unterste und die oberste Umlenkscheibe jeweils vom Rohrboden weiter entfernt als der Abstand zweier aufeinanderfolgende Umlenkscheiben zueinander, bevorzugt um etwa das 1,5-fache.

Die Form der freigelassenen Durchtrittsöffnungen ist grundsätzlich beliebig. Für den Fall eines zylindrischen Reaktors sind sie bevorzugt kreissegmentförmig.

Bevorzugt lassen alle Umlenkbleche jeweils gleiche Durchtrittsöffnungen frei.

Die Fläche jeder Durchtrittsöffnung beträgt bevorzugt 5 bis 20 %, insbesondere 8 bis 14 % des Reaktorquerschnitts.

Bevorzugt sind die Umlenkbleche nicht dichtend um die Kontaktrohre angeordnet, und lassen eine Leckageströmung von bis zu 40 Vol.-% des Gesamtstroms des Wärmetauschmittels zu. Hierzu sind zwischen den Kontaktrohren und Umlenkblechen Spalte im Bereich von 0,1 bis 0,6 mm, bevorzugt von 0,2 bis 0,3 mm vorgesehen.

Es ist vorteilhaft, die Umlenkbleche mit Ausnahme der Bereiche der Durchtrittsöffnungen zur Reaktorinnenwand hin flüssigkeitsdicht zu gestalten, so dass dort kein zusätzlicher Leckagestrom auftritt.

Die Umlenkbleche werden aus einem korrosionsfesten Material, bevorzugt Edelstahl, insbesondere Duplexstahl, bevorzugt in einer Dicke von 8 bis 30 mm, bevorzugt von 10 bis 20 mm, gebildet.

Die Kontaktrohre sind mit einem Feststoffkatalysator, bevorzugt Aktivkohle, gefüllt. Die Katalysatorschüttung in den Kontaktrohren weist bevorzugt ein Lückenvolumen von 0,33 bis 0,5, insbesondere von 0,33 bis 0,40, auf.

Bevorzugt sind in beiden Rohrböden Entlüftungs- und/oder Ablaufbohrungen vorgesehen, insbesondere an mehreren, bevorzugt an 2 bis 4, symmetrisch über den Reaktorquerschnitt verteilten Stellen, deren Öffnungen nach außen bevorzugt in auf der Reaktoraußenwand aufgeschweißten Halbschalen münden.

Zum Ausgleich von thermischen Ausdehnungen ist im Reaktormantel vorteilhaft ein Kompensator vorgesehen.

Die Zu- und Abführung des Wärmetauschmittels in bzw. aus dem Zwischenraum zwischen den Kontaktrohren erfolgt bevorzugt über Stutzen oder Teilringkanäle am Reaktormantel, die Öffnungen zum Reaktorinnenraum aufweisen, bevorzugt mit kreisförmigem oder rechteckigem Querschnitt und mit einem Öffnungsverhältnis im Bereich von 5 bis 50 %, bevorzugt von 15 bis 30 %.

Es ist bevorzugt, den Reaktor in Bezug auf eine Querschnittsebene in der Reaktormitte symmetrisch auszubilden. Gemäß dieser bevorzugten Ausführungsform weist somit ein aufrechtstehender Reaktor jeweils einen identischen unteren und oberen Teil auf. Darunter wird auch verstanden, dass alle Anschlüsse sowie die Reaktorpratzen, die der Reaktorabstützung dienen, symmetrisch ausgebildet sind. Der Katalysator wird, je nach Reaktionsfortschritt, als Folge der Wanderung der Hot-Spot-Zone unterschiedlich verbraucht. Analog werden die Kontaktrohre in unterschiedlichen Bereichen verschieden beansprucht, mit stärkster Beanspruchung im Bereich der Hot-Spot-Zone. In dieser Hot-Spot-Zone kommt es zuerst zum Abtrag der Innenwand der Kontaktrohre und zur Gefahr, dass die Kontaktrohre undicht werden. Bei Undichte muss der gesamte Reaktor von Katalysatorfüllung und Wärmetauschmittel entleert und die entleerte Katalysatorfüllung mehrere Tage lang mit Stickstoff gespült werden. Das oder die undichten Rohre müssen ausgewechselt und neu mit Katalysator befüllt werden. Dieser Gefahr kann durch die oben beschriebene symmetrische Ausführungsform vorgebeugt werden, bei der es möglich ist, den Reaktor rechtzeitig vor dem Erreichen eines bestimmten kritischen Abtrages zu drehen, wobei dann der Hot-Spot-Bereich auf einen zuvor weniger beanspruchten Teil der Kontaktrohre trifft. Dadurch lässt sich die Betriebszeit des Reaktors beträchtlich steigern, häufig verdoppeln.

In einer vorteilhaften Ausführungsform ist der Reaktor mehrzonig, insbesondere zwei- oder dreizonig, mit unterschiedlicher Temperierung der Zonen, ausgebildet. Besonders bevorzugt ist die Ausbildung als Zweizonen-Reaktor. Diese Ausführungsform kann besonders vorteilhaft eingesetzt werden, wenn für die Reaktion zu Phosgen von weitgehend von Brom befreitem Chlor ausgegangen wird. Dabei wurde beobachtet, dass die Bildungsreaktion des Phosgens langsamer verläuft, als beim Einsatz von mit Brom verunreinigtem Chlor. Ursache hierfür könnte eine Radikalbildung von Brom mit Aktivkohle sein, die die Reaktion mit Chlor beschleunigt. Verläuft die Bildungsreaktion von Phosgen langsamer, beispielsweise wegen des Einsatzes von weitgehend von Brom gereinigtem Chlor, so wäre es grundsätzlich möglich, durch Anhebung der Wärmetauschmitteleintrittstemperatur den Gesamtumsatz zu Phosgen zu erhöhen. Dies ist jedoch nur begrenzt möglich, da das flüssige Wärmetauschmittel an der Außenwand der Kontaktrohre sieden kann und somit kein eindeutiger Wärmeübergang und keine eindeutige Reaktionsführung gewährleistet ist.

Daher wird eine vorteilhafte Ausführungsform als Zweizonen-Reaktor zur Verfügung gestellt, mit unterschiedlicher Temperierung der beiden Zonen und zwar mit einer stärkeren Kühlung in der ersten Zone in Strömungsrichtung des Reaktionsgemisches, dem Hauptreaktionsbereich und mit einer schwächeren Kühlung in der zweiten Zone, im Nachreaktionsbereich bzw. im Bereich, in dem der Restumsatz erfolgt. In der ersten Zone wird vorzugsweise mit kälterem Wärmetauschmittel temperiert gegenüber der zweiten Zone.

Die beiden Zonen sind im Zwischenraum zwischen den Kontaktrohren durch ein Trennblech voneinander flüssigkeitsdicht getrennt, dergestalt, dass das Wärmetauschmittel innerhalb des Reaktors nicht aus einer Zone in die andere strömen kann. Die Kontaktrohre sind in den Trennblechen dichtend eingewalzt oder hydraulisch aufgeweitet. Das Trennblech wird vorteilhaft mit einer Dicke im Bereich von 15 bis 60 mm, bevorzugt von 30 bis 50 mm ausgebildet.

Für die Ausbildung von Drei- oder Mehrzonen-Reaktoren sind entsprechend zwei oder mehrere Trennbleche zur Abtrennung der einzelnen Zonen voneinander vorzusehen.

Zum Ausgleich von thermischen Spannungen ist vorteilhaft in jeder Reaktionszone am Reaktormantel jeweils ein Kompensator vorzusehen.

Die Aufteilung von Zone 1 zu Zone 2 kann, für den Fall des Zweizonen-Reaktors, in einem Verhältnis im Bereich von 1 : 1 bis 3 : 1, vorteilhaft im Verhältnis 2 : 1 erfolgen.

Die Gesamtlänge der Kontaktrohre eines Zweizonen-Reaktors liegt häufig im Bereich zwischen 2,5 und 6,0 m, bevorzugt im Bereich zwischen 3,0 und 4,0 m.

Der Reaktionsfortschritt lässt sich an der Austrittstemperatur des Wärmetauschmittels aus der zweiten Zone erkennen. Steigt die Temperatur dort merklich an, ist dies ein Zeichen, dass die Reaktionsfront in den unteren Bereich des Reaktors wandert.

Für die zweite Zone ist ein geringerer Volumenstrom an Wärmetauschmittel gegenüber der ersten Zone erforderlich. Der aus der zweiten Zone austretende Wärmetauschmittelstrom kann mit dem in die erste Zone eintretenden Wärmetauschmittelstrom zusammengeführt werden, so dass durch die erste Zone ein größerer Gesamtstrom an Wärmetauschmittel fließt.

Die Umlenkbereiche für das Wärmetauschmittel sind vorzugsweise in allen Zonen des Zwei-, Drei- oder Mehrzonen-Reaktors unberohrt.

Bevorzugt ist in mindestens einem der Kontaktrohre eine Hülse zur Aufnahme eines Multi-Thermoelementes mit zwei oder mehreren Temperaturmesspunkten angeordnet, die unterhalb des Reaktors mündet. Die Hülse wird über einen Stutzen durch die untere Haube des Reaktors geführt. Die Anordnung im unteren Kontaktrohrbereich ist aufgrund der niedrigeren Reaktionstemperatur in diesem Bereich vorteilhaft. In der Regel ist die Temperatur im oberen Kontaktrohrbereich eines Phosgenreaktors höher, mit entsprechend stärkerer Belastung der Werkstoffe durch das aggressive, Phosgen und Chlor umfassende Reaktionsgemisch. Wird die Hülse dagegen, wie vorgeschlagen, im unteren Kontaktrohrbereich angeordnet, so ist die Belastung für den Werkstoff der Hülse, aufgrund der dort niedrigeren Temperaturen, geringer. Das Multi-Thermoelement ist bevorzugt fest verdrahtet und weist zwei oder mehrere, bevorzugt bis zu 10, vorzugsweise regelmäßig beabstandete Temperaturmesspunkte auf. Durch die Temperaturmessung kann der Reaktionsfortschritt überwacht werden und Messwerte gewonnen werden, die Rückschlüsse auf die Katalysatoraktivität und den geeigneten Zeitpunkt zum Auswechseln desselben erlauben.

Das erfindungsgemäße Verfahren kann auch in einer Vorrichtung zur Herstellung von Phosgen durch Gasphasenreaktion von Kohlenmonoxid und Chlor in Gegenwart eines Feststofflcatalysators durchgeführt werden, gebildet aus zwei oder mehreren wie vorstehend beschriebenen Reaktoren, die hintereinander geschaltet sind und wobei bevorzugt im Verbindungsteil zwischen der unteren Haube des oberen Reaktors und der oberen Haube des unteren Reaktors eine Konzentrationsmessstelle für den Restchlor-Gehalt und/oder eine Temperaturmessstelle vorgesehen ist.

Vorzugsweise sind zwei Reaktoren hintereinander geschaltet und der zweite Reaktor weist Kontaktrohre mit größerem Rohrinnendurchmesser gegenüber dem ersten Reaktor auf, insbesondere mit einem Rohrinnendurchmesser im Bereich von 20 bis 110 mm, vorzugsweise im Bereich von 60 bis 90 mm.

In einer weiteren Ausführungsform ist es möglich, zwei oder mehrere Reaktoren unmittelbar hintereinander zu schalten, unter Verzicht auf dazwischen angeordnete Hauben. Bevorzugt werden zwei Reaktoren unmittelbar hintereinander geschaltet. Die aneinander angrenzenden Rohrböden, das heißt der untere Rohrboden des ersten Reaktors und der obere Rohrboden des zweiten Reaktors sind vorteilhaft mittels Distanzhaltern beabstandet miteinander verbunden, um eine Quervermischung des aus den Kontaktrohren des ersten Reaktors austretenden Reaktionsgemisches vor Eintritt desselben in den zweiten Reaktor zu ermöglichen.

Vorteilhaft kann ein wie vorstehend beschriebener Reaktor oder eine Vorrichtung von einer Sicherheitskammer umschlossen sein. Dabei ist es bevorzugt, den zweiten und/oder die weiteren Reaktoren gegenüber dem davor angeordneten Reaktor mit kleinerem Außenmaß auszubilden, wodurch dieselben leichter ausgetauscht werden können.

Gegenstand der Erfindung ist auch ein Verfahren zur Herstellung von Phosgen durch Gasphasenreaktion von Kohlenmonoxid und Chlor in Gegenwart eines Feststoffkatalysators in einem wie vorstehend beschriebenen Reaktor.

Im erfindungsgemäßen Verfahren wird bevorzugt als flüssiges Wärmetauschmittel Wasser, wässrige Natriumhydroxidlösung, oder ein oder mehrere, bevorzugt chlorierte, Kohlenwasserstoffe, insbesondere Monochlorbenzol, eingesetzt.

Das erfindungsgemäße Verfahren ist bezüglich der Stromführung von gasförmigem Reaktionsgemisch und Wärmetauschmittel nicht eingeschränkt; es ist gleichermaßen möglich, das gasförmige Reaktionsgemisch und das flüssige Wärmetauschmittel im Kreuzgegenstrom oder im Kreuzgleichstrom durch den Reaktor zu führen. Hierbei kann das gasförmige Reaktionsgemisch gleichermaßen von oben wie auch von unten über die Hauben durch die Kontaktrohre des Reaktors geleitet werden.

Der in die Kontaktrohre eingebrachte Katalysator ist bevorzugt Aktivkohle, insbesondere in Form von Kugeln, Kegeln, Zylindern, Stränglingen, Ringen oder Tabletten. Besonders bevorzugt ist der der Zuführung des gasförmigen Reaktionsgemisches zugewandte Bereich der Kontaktrohre auf eine Länge von 5 bis 20 %, bevorzugt auf eine Länge von 3 bis 10 %, der Gesamtrohrlänge der Kontaktrohre mit einem Inertmaterial befüllt.

Bevorzugt kann in die Kontaktrohre ein zumindest teilweise offenporiger Kohlenstoffschaum als Katalysator eingebracht werden. Derartige Katalysatoren sind besonders vorteilhaft aufgrund der sehr großen inneren Oberfläche.

Die Kontaktrohre werden bevorzugt, insbesondere durch ihre Anordnung im Reaktorinnenraum, dergestalt ausgelegt, dass ihr wärmetauschmittelseitiger Wärmeübergangskoeffizient im Bereich von 500 bis 2000 W/m²/K, insbesondere im Bereich von 1000 bis 1500 W/m²/K, liegt.

Das erfindungsgemäße Verfahren wird bevorzugt in der Weise durchgeführt, dass man Kohlenmonoxid und Chlor in einem Molverhältnis im Bereich von 1,01 bis 1,10, insbesondere in einem Bereich von 1,03 bis 1,06 von oben oder von unten durch die Kontaktrohre leitet, wobei die Längsachse des Reaktors vertikal ausgerichtet ist.

Im erfindungsgemäßen Verfahren beträgt der Druck im Reaktor bevorzugt 2 bis 10 bar absolut, insbesondere 3 bis 5 bar absolut.

Die Querschnittsbelastung des Reaktors beträgt bevorzugt 0,5 bis 4 kg Phosgen pro sec. und pro m² angeströmte Reaktionsrohrquerschnittsfläche, insbesondere 1,5 bis 3 kg Phosgen pro sec. und m² angeströmte Reaktionsrohrquerschnittsfläche. Die Querschnittsbelastung ist somit gegenüber herkömmlichen Phosgenreaktoren erhöht.

Die Erfindung wird im Folgenden anhand einer Zeichnung sowie von Ausführungsbeispielen näher erläutert.

Es zeigen im Einzelnen:
- Figur 1: eine erste bevorzugte Ausführungsform eines erfindungsgemäßen Reaktors im Längsschnitt mit Kreuzgegenstromführung von Reaktionsgemisch und Wärmetauschmittel,
- Figur 2: eine weitere bevorzugte Ausführungsform eines erfindungsgemäßen Reaktors im Längsschnitt, wobei Reaktionsgemisch und Wärmetauschmittel im Kreuzgleichstrom geführt werden und die Kontaktrohre im Eintrittsbereich des Reaktionsgemisches mit einem Inertmaterial befüllt sind,
- Figur 3: einen Querschnitt in der Ebene A-A durch einen in Fig. 1 oder Fig. 2 dargestellten erfindungsgemäßen Reaktor,
- Figur 4: einen Teilbereich des Querschnitts aus Fig. 3,
- Fig. 5 bis 7: jeweils Teilbereiche der Längsschnittdarstellungen in Fig. 1 oder Fig. 2,
- Fig. 8: eine bevorzugte Ausführungsform eines Zweizonen-Realctors,
- Fig. 9: eine Detaildarstellung des Reaktors aus Fig. 8,
- Fig. 10: eine bevorzugte Ausführungsform eines Dreizonen-Reaktors,
- Fig. 11: eine bevorzugte Ausführungsform von zwei unmittelbar übereinander angeordneten Reaktoren, wobei beide Reaktoren im Umlenkbereich des Wärmetauschmittels unberohrt sind,
- Fig. 12: eine weitere bevorzugte Ausführungsform von zwei unmittelbar übereinander angeordneten Reaktoren, wobei der zweite Reaktor voll berohrt ist,
- Figur 13: eine Vorrichtung mit zwei hintereinander geschalteten Reaktoren und
- Figur 14: einen Ausschnitt aus Figur 13 mit einer Hülse zur Aufnahme eines Thermoelementes.

In den Figuren bezeichnen gleiche Bezugsziffern gleiche oder entsprechende Merkmale.

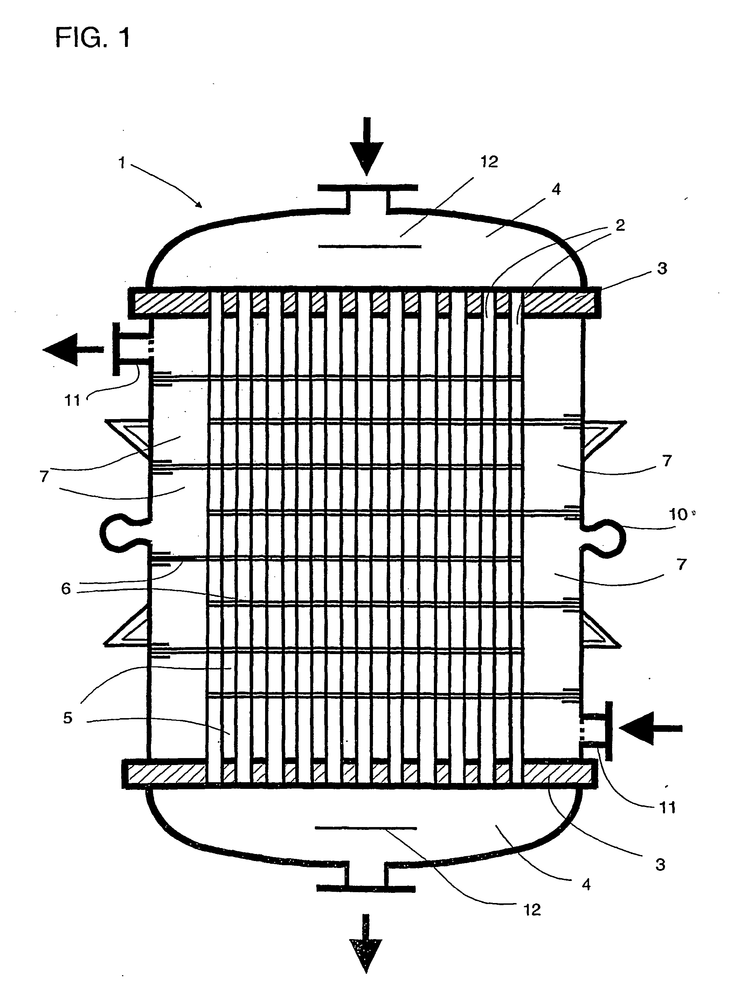

Figur 1 stellt eine bevorzugte Ausführungsform eines erfindungsgemäßen Reaktors 1 im Längsschnitt dar, mit einem Bündel von Kontaktrohren 2, die parallel zueinander in Längsrichtung des Reaktors 1 in Rohrböden 3 abdichtend befestigt sind, mit Hauben 4 an beiden Enden des Reaktors 1, und mit bevorzugt darin angeordneten Gasverteilern 12. Im Zwischenraum 5 zwischen den Kontaktrohren 2, der vom flüssigen Wärmetauschmittel durchströmt wird, sind Umlenkbleche 6 senkrecht zur Reaktorlängsrichtung angeordnet, die alternierend einander gegenüberliegende Durchtrittsöffnungen 7 an der Reaktorinnenwand freilassen.

Für die Zu- und Abführung des Wärmetauschmittels sind Stutzen oder Teilringkanäle 11 vorgesehen. Zum Ausgleich von thermischen Spannungen ist ein Kompensator 10 am Reaktormantel vorgesehen.

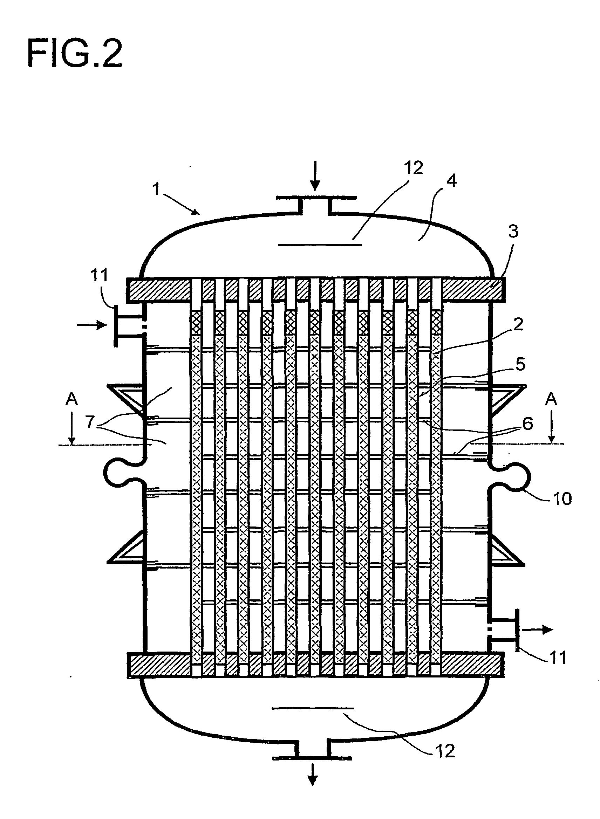

Die in Fig. 2 dargestellte weitere bevorzugte Ausführungsform unterscheidet sich von der in Fig. 1 dargestellten Ausführungsform durch die Stromführung von Reaktionsgemisch und Wärmetauschmittel (Kreuzgleichstrom).

Bevorzugt sind, wie in Fig. 2 dargestellt, die Kontaktrohre 2 im Eintrittsbereich des gasförmigen Reaktionsgemisches mit einem Inertmaterial befüllt.

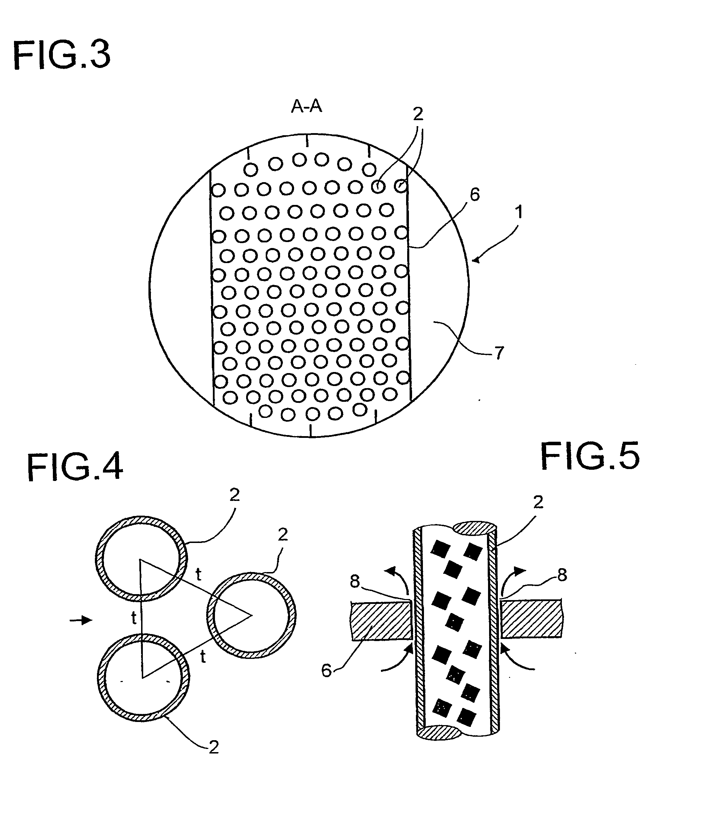

Die Querschnittsdarstellung in Fig. 3 verdeutlicht die bevorzugt kreissegmentförmige Ausbildung der von den Umlenkblechen 6 freigelassenen Durchtrittsöffnungen 7 im Bereich der Reaktorinnenwand.

Fig. 4 verdeutlicht die bevorzugte Anordnung der Kontaktrohre 2 in Dreiecksteilung, das heißt mit jeweils gleichem Abstand t der Mittelpunkte unmittelbar benachbarter Kontaktrohre zueinander.

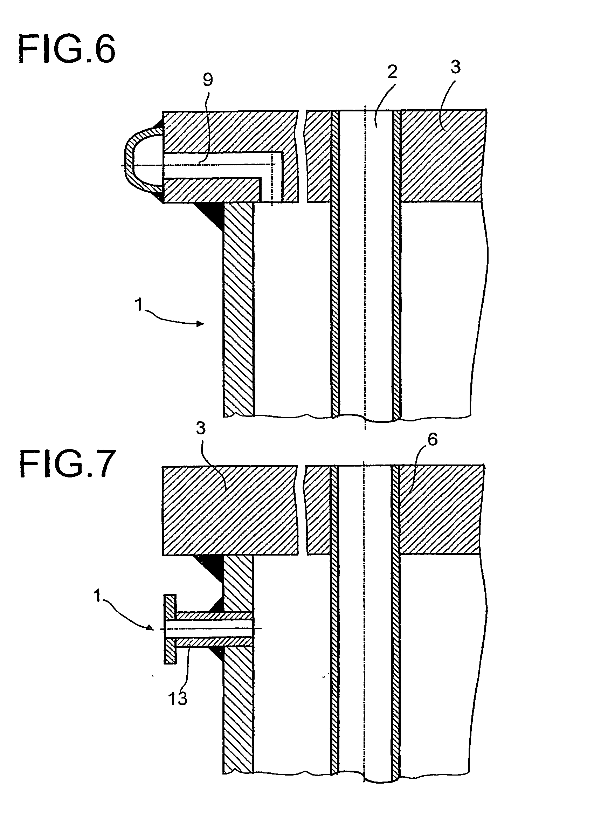

Der Ausschnitt in Fig. 5 verdeutlicht die bevorzugte Ausbildung von Spalten 8 zwischen Kontaktrohren 2 und Umlenkblechen 6.

Fig. 6 zeigt die bevorzugte Anordnung von Entlüftungs- und/oder Ablaufbohrungen 9 im Rohrboden 3 nach außen. Die Mündung der Entlüftungs- und/oder Ablaufbohrungen nach außen ist bevorzugt, wie in Fig. 6 dargestellt, mit einer aufgeschweißten Halbschale als Sammler bedeckt.

Der Ausschnitt in Fig. 7 verdeutlicht eine andere Art der Entlüftung, mittels Entlüftungsstutzen 13. Dazu wird in dem Reaktormantel ein Loch gebohrt und ein Stutzen angeschweißt, bevorzugt ca. 20 mm unterhalb des Rohrbodens.

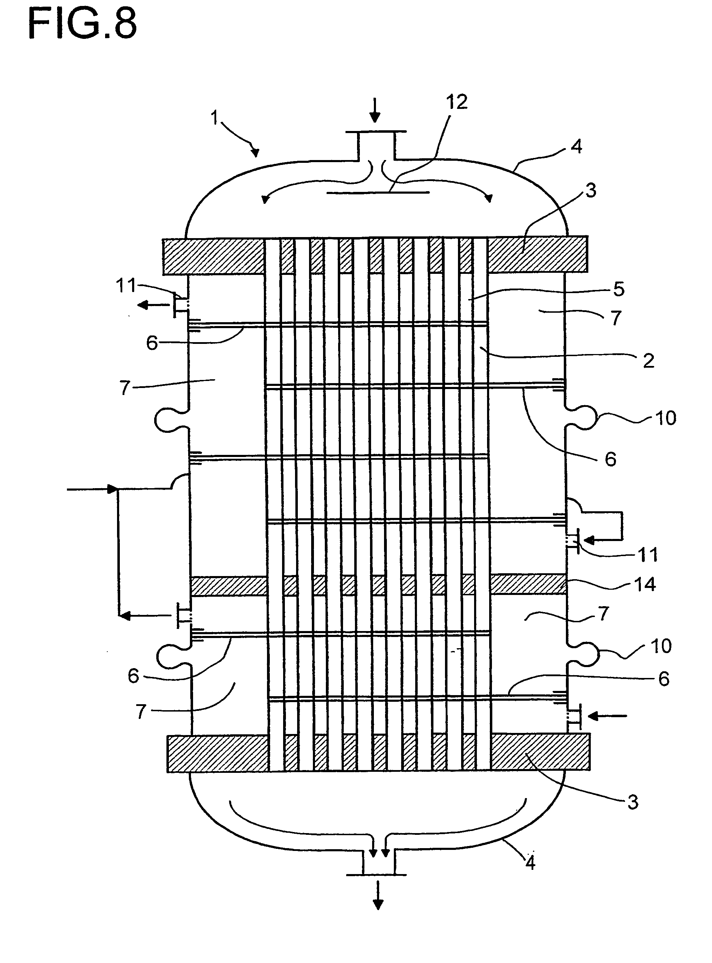

Der in Fig. 8 im Längsschnitt dargestellte Reaktor weist ein Trennblech 14 auf, durch das der Zwischenraum 5 zwischen den Kontaktrohren 2 in eine erste, obere Zone und eine zweite, untere Zone flüssigkeitsdicht getrennt wird. Aus der Fig. ist zu erkennen, dass, in einer bevorzugten Verfahrensführung, ein Teilstrom des aus der zweiten Zone austretenden Wärmetauschmittels dem der ersten Zone zugeführten Wärmetauschmittelstrom zugemischt werden kann.

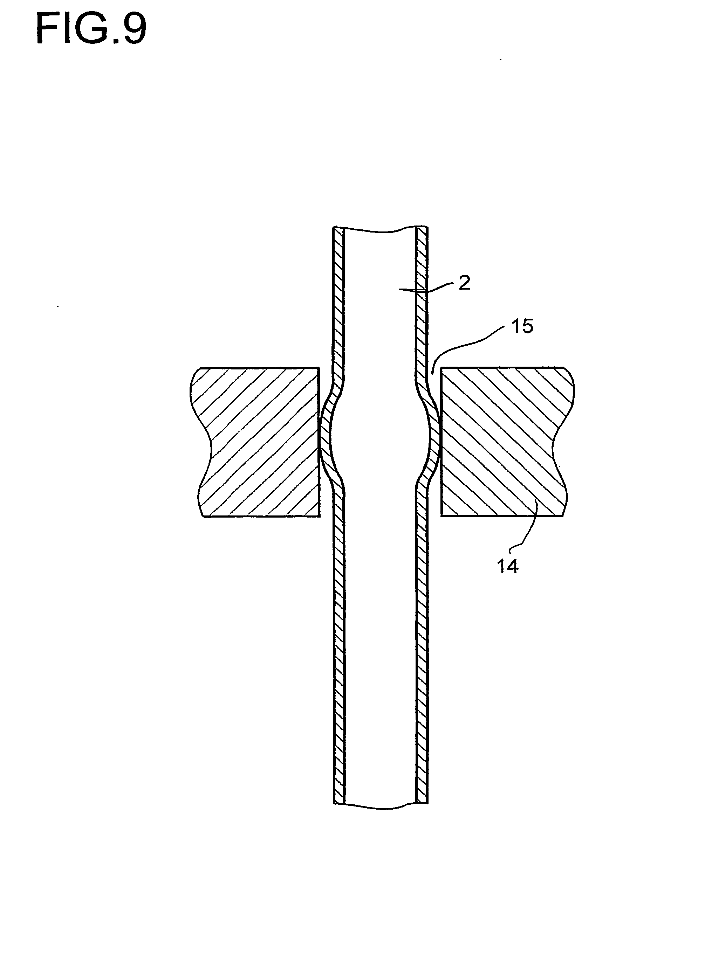

Fig. 9 zeigt ein Detail des in Fig. 8 dargestellten Reaktors, und zwar die flüssigkeitsdichte Einwalzung oder hydraulische Rohraufweitung des Kontaktrobrs 2 in das Trennblech 14, wodurch der Spalt 15 zwischen Kontaktrohr 2 und Trennblech 14 verschlossen wird.

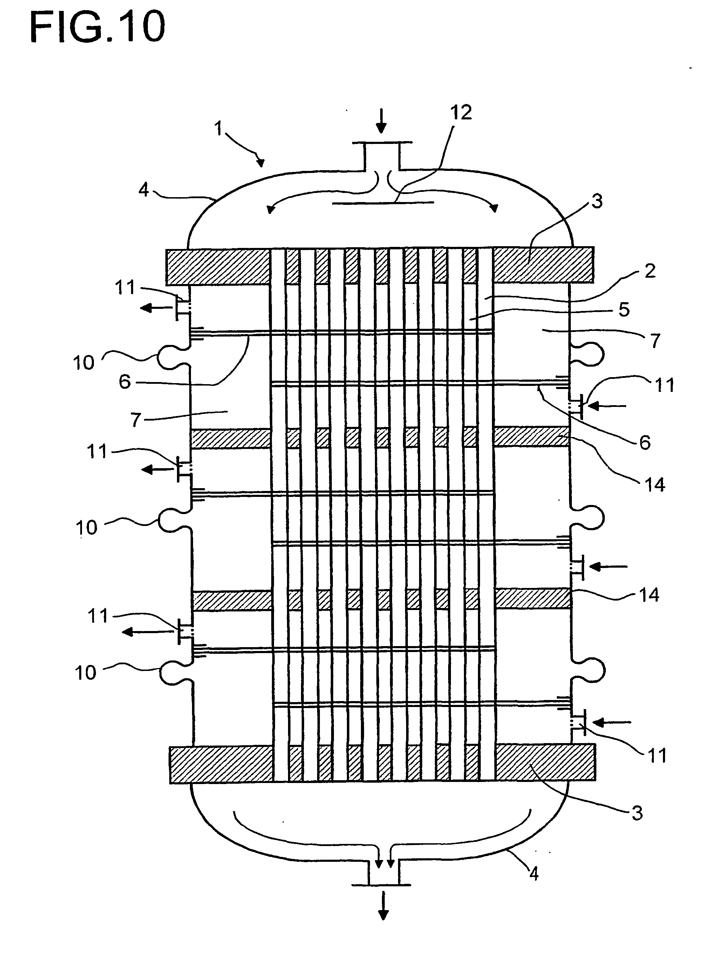

Fig. 10 zeigt eine weitere bevorzugte Ausführungsform eines Reaktors 1 mit drei durch Trennbleche 14 flüssigkeitsdicht voneinander getrennten Zonen.

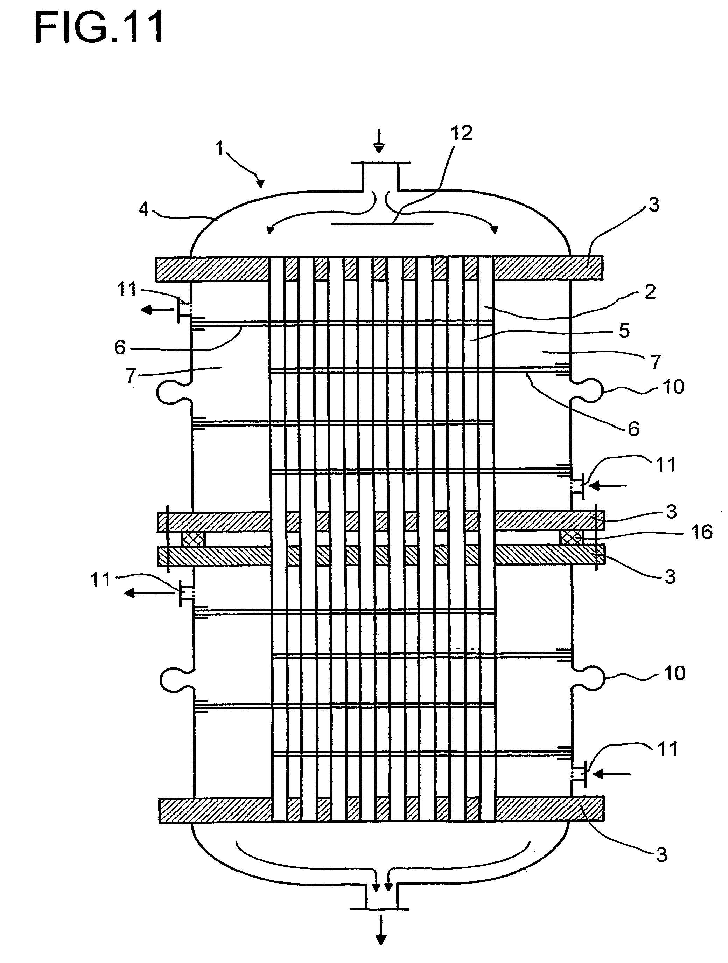

Fig. 11 zeigt eine Anordnung von zwei unmittelbar hintereinandergeschalteten Reaktoren, wobei auf die untere Haube des oberen Reaktors und auf die obere Haube des unteren Reaktors verzichtet wurde. Zwischen dem unteren Rohrboden des oberen Reaktors und dem oberen Rohrboden des unteren Reaktors ist ein Distanzhalter 16 vorgesehen. Beide Reaktoren sind jeweils im Umlenkbereich für das Wärmetauschmittel unberohrt.

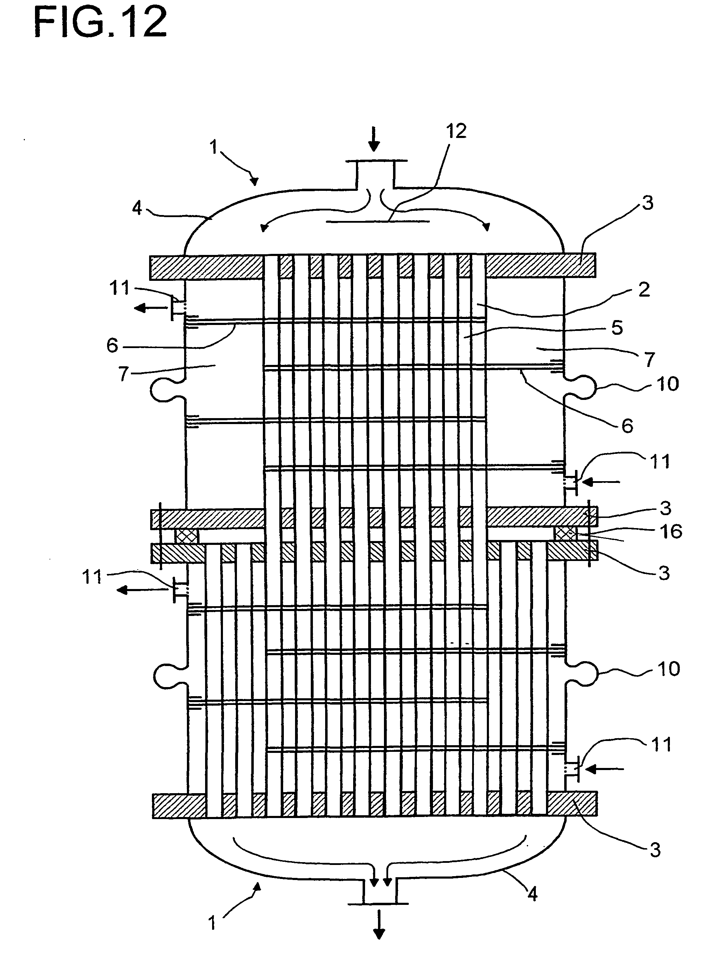

Die in Fig. 12 dargestellte Ausführungsform unterscheidet sich von der vorhergehenden dadurch, dass der zweite Reaktor voll berohrt ist, das heißt auch im Umlenkbereich für das Wärmetauschmittel mit Kontaktrohren ausgestattet ist.

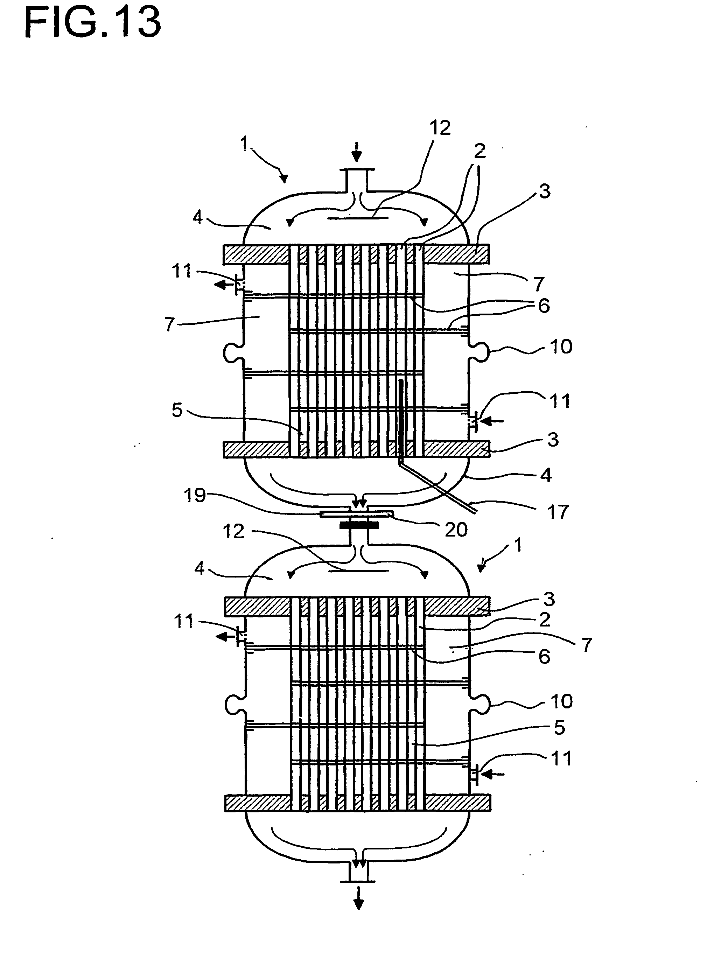

Figur 13 zeigt eine Vorrichtung mit zwei hintereinander geschalteten Reaktoren 1 mit einer Hülse 17, die über die untere Haube 4 des ersten Reaktors 1 nach außen mündet und die der Aufnahme eines Multi-Thermoelementes 18 dient. Im Verbindungsteil zwischen den beiden Reaktoren 1 ist eine Konzentrationsmessstelle 19 für den Rest-Chlorgehalt sowie eine Temperaturmessstelle 20 vorgesehen.

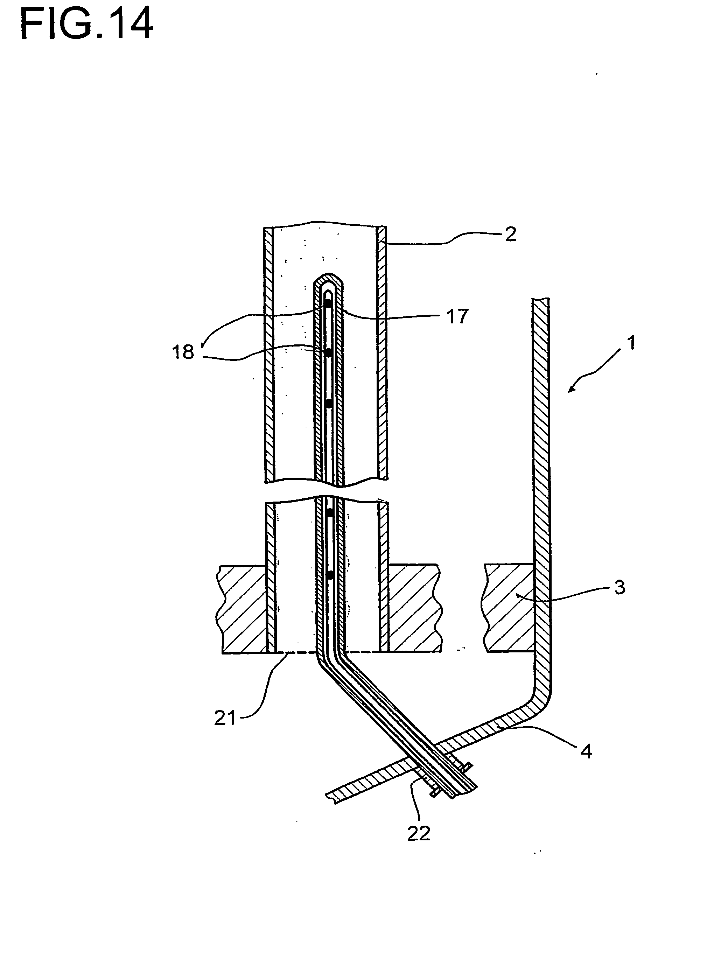

Der Ausschnitt in Figur 14 verdeutlicht die Anordnung des Multi-Thermoelementes 18 mit mehreren Temperaturmesspunlcten in der Hülse 17, die über den Stutzen 22 in der unteren Haube 4 des Reaktors 1 nach außen mündet. Die Detaildarstellung in Figur 14 verdeutlicht darüber hinaus die Auflage 21 für den Katalysator im Kontaktrohr 2.

Die Erfindung wird im Folgenden anhand eines Ausführungsbeispiels näher erläutert:

Durch die Kontaktrohre eines zylindrischen Rohrbündelreaktors mit 1256 Kontaktrohren, mit jeweils einer Rohrlänge von 3000 mm, einem Rohrinnendurchmesser von 39,3 mm und einer Wandstärke von 2,6 mm, die im Bereich der Zuführung des Reaktionsgemisches auf einer Länge von 200 mm mit einem inerten keramischen Material und anschließend auf eine Länge von 2700 mm mit einer Schüttung aus einem zylindrischen Katalysator aus Aktivkohle mit dem Durchmesser der zylindrischen Katalysatorteilchen von 4 mm und einer Länge von 5 mm und einer Porosität von 0,404 befüllt waren, wurde ein Chlor-Massenstrom von 7087 kg/h und ein Kohlenmonoxid-Massenstrom von 2913 kg/h bei einem Vordruck des Reaktionsgases, das heißt einem Druck des Reaktionsgases vor dem Reaktor von 4 bar absolut unter Erhalt eines Produktstroms von ca. 10000 kg/h Phosgen durchgeleitet.

Im Reaktor waren zehn Umlenkbleche eingebaut, die alternierend im Bereich zwischen dem freien Ende jedes Umlenkbleches und der Reaktorinnenwand kreissegmentförmige Durchtrittsöffnungen freiließen, von jeweils etwa 15 % des gesamten Reaktorquerschnitts.

Die Kontaktrohre waren aus Duplexstahl 1.4462 gebildet.

Durch die Kontaktrohre wurde ein Reaktionsgemisch aus Kohlenmonoxid und Chlor in einem Mol-Verhältnis von 1,04226 von oben nach unten durchgeleitet. Das flüssige Kühlmittel, Monochlorbenzol, wurde im Bereich zwischen den Kontaktrohren von unten nach oben durch den Reaktor geleitet.

Die Eintrittstemperatur des Reaktionsgemisches betrug 50°C. Die Eintrittstemperatur des flüssigen Kühlmittels, Monochlorbenzol, betrug 60°C.

Die oben aufgeführten apparativen und verfahrenstechnischen Bedingungen wurden für einen Vergleichsversuch nach dem Stand der Technik sowie ftir einen Versuch nach dem erfindungsgemäßen Verfahren unverändert belassen. Der einzige Unterschied bestand darin, dass der Reaktor nach dem Stand der Technik im Bereich der Durchtrittsöffnungen für das Wärmetauschmittel vollständig berohrt war, das heißt eine Anzahl von ca. 200 Rohren befanden sich im Bereich der Durchtrittsöffnungen der Umlenkbleche.

Demgegenüber wurde der erfindungsgemäße Reaktor im Umlenkbereich für das Wärmetauschmittel, das heißt im Bereich der Durchtrittsöffnungen der Umlenkbleche, rohrfrei belassen.

Für den Reaktor nach dem Stand der Technik wurden die in der nachfolgenden Tabelle aufgeführten signifikanten Unterschiede zwischen Kontaktrohren im Umlenkbereich für das Wärmetauschmittel und vom Wärmetauschmittel quer angeströmten Kontaktrohren, das heißt Kontaktrohren außerhalb des Umlenkbereichs für das Wärmetauschmittel aufgezeigt:

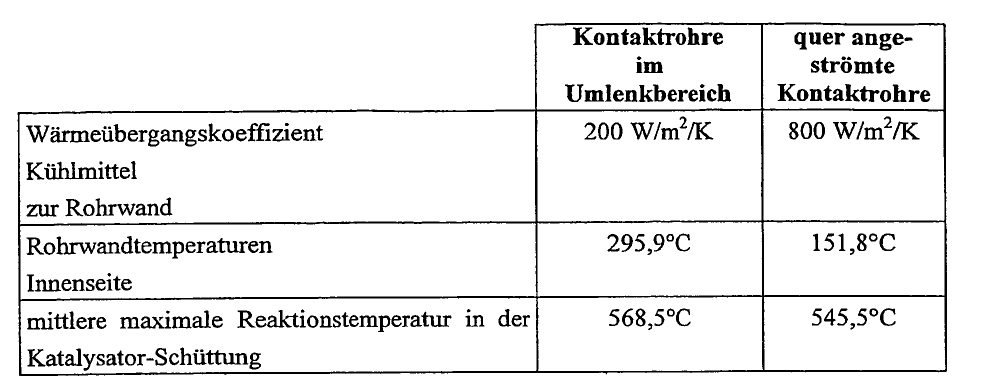

Für die Kontaktrohre im Umlenkbereich war der Wärmeübergangskoeffizient mit 200 W/m²/K des Kühlmittels zur Rohrwand signifikant niedriger gegenüber dem Wärmeübergangskoeffizienten der quereingeströmten Kontaktrohre, mit 800 W/m²/K.

Dieses Ergebnis erklärt sich dadurch, dass im Reaktor nach dem Stand der Technik in den vollberohrten Umlenkbereichen an der Reaktorinnenwand überwiegend eine Längsströmung des Wärmetauschmittels, jedoch kaum Querströmung auftrat. Demgemäss stieg die Temperatur der Rohre auf den das Material schädigenden Wert von 295,9°C. Das Wärmetauschmittel fing sogar an, lokal zu sieden. Durch größere Gasblasen wurde die Kühlung noch schlechter. Durch Zersetzung des Wärmetauschmittels bildeten sich Ablagerungen auf der Außenseite der Kontaktrohre, die isolierend wirkten.

Entsprechend wurde in einem Langzeitversuch mit einem Reaktor nach dem Stand der Technik ein starker Materialabtrag, von etwa 0,8 mm pro Jahr, an den Kontaktrohren im Umlenkbereich sowie teilweise Verkokungen des Wärmetauschmittels Monochlorbenzol auf der Kühlmittelseite der Kontaktrohre gefunden.

Demgegenüber war in den Bereichen mit Queranströmung der Wärmeübergangskoeffizient des Wärmetauschmittels zur Rohrwand auf den vierfachen Wert erhöht. In der Folge wurden für die Wandtemperatur auf der Innenseite der Kontaktrohre für das Rohrmaterial unschädliche 151,8°C erreicht, die bei den Druckverhältnissen im Wärmetauschmittel um die Kontaktrohre, von 2,5 bar absolut, noch unterhalb der Siedetemperatur des Wärmetauschmittels Monochlorbenzol liegen. Im Ergebnis wurde auch keine Schädigung der Kontaktrohre im Querstrombereich gefunden.

Darüber hinaus war auch der maximale Anstieg der mittleren Reaktionstemperatur in der Katalysatorschüttung in quer angeströmten Kontaktrohren mit 545,5° gegenüber 568,5°C in den Kontaktrohren im Umlenkbereich deutlich niedriger.

Im erfindungsgemäßen Reaktor wurde demgegenüber auf die Kontaktrohre im Bereich der Durchtrittsöffnungen der Umlenkbleche, das heißt im Umlenkbereich für das Wärmetauschmittel, verzichtet. Dadurch waren im erfindungsgemäßen Reaktor ausschließlich Kontaktrohre mit Queranströmung durch das Wärmetauschmittel vorhanden, mit den oben dargelegten signifikanten verfahrenstechnischen Vorteilen gegenüber den überwiegend längs angeströmten Kontaktrohren im Umlenkbereich für das Wärmetauschmittel.

Durch die erfindungsgemäße Verfahrensführung konnten beachtliche Wirtschaftlichkeitssteigerungen erreicht werden: ausgehend vom gleichen Reaktor, der jedoch gegenüber dem Stand der Technik in den Umlenkbereichen für das Wärmetauschmittel, wie im Beispiel dargestellt, unberohrt war, konnte die Gasbelastung mit dem Reaktionsgemisch bei gleichzeitiger Erhöhung der Kühlmittelmenge auf etwa das Doppelte gegenüber einem Reaktor nach dem Stand der Technik erhöht werden, mit der Folge einer entsprechenden Erhöhung der Kapazität und Verlängerung der Standzeit des Reaktors.

## Patentansprüche

1. Verfahren zur Herstellung von Phosgen durch Gasphasenreaktion von Kohlenmonoxid und Chlor in Gegenwart eines Feststoffkatalysators in einem oder mehreren zylinderförmigen Reaktoren (1), mit einem Bündel von parallel zueinander, in Reaktorlängsrichtung angeordneten Kontaktrohren (2), die an ihren Enden in Rohrböden (3) befestigt sind, mit je einer Haube (4) an beiden Enden des Reaktors (1), sowie mit senkrecht zur Reaktorlängsrichtudg im Zwischenraum (5) zwischen den Kontaktrohren (2) angeordneten Umlenkblechen (6); die alternierend einander gegenüberliegende Durchtrittsöffnungen (7) an der Reaktorinnenwand freilassen, wobei die Kontaktrohre (2) mit dem Feststoffkatakysator befüllt sind, das gasförmige Reaktionsgemisch von einem Reaktorende über eine Haube (4) durch die Kontaktrohre (2) geleitet und vom entgegengesetzten Reaktoreinde über die zweite Haube (4) abgezogen und durch den Zwischenraum (5) um die Kontaktrohre (2) ein flüssiges Wärmetauschmittel geleitet wird, **dadurch gekennzeichnet, dass** man den Reaktor (die Reaktoren) (1) zur Durchfürung des Verfahrens im Bereich der Durchtrittsöffnungen (7) unberohrt lässt.

2. Verfahren nach Anspruch 1, **dadurch gekennzeichnet, dass** die Umlenkbleche (6) kreissegmentförmig ausgebildet sind, dass alle Umlenkbleche (6) jeweils gleiche Durchtrittsöffnungen (7) freilassen und dass die Fläche jeder Durchtrittsöffnung (7) jeweils 5 bis 20 %, bevorzugt 8 bis 14 %, des Reaktorquerschnitts beträgt.

3. Verfahren nach Anspruch 1 oder 2, **gekennzeichnet durch** eine Anzahl von 100 bis 10.000, bevorzugt von 1000 bis 3500 Kontaktrohren (2), wobei jedes Kontaktrohr (2) eine Länge im Bereich von 1,5 bis 6,0 m, bevorzugt im Bereich von 2,0 bis 3,5 m, und eine Wandstärke im Bereich von 2,0 bis 4,0 mm, besonders von 2,5 bis 3,0 mm und einen Rohrinnendurchmesser im Bereich von 20 bis 90 mm, bevorzugt im Bereich von 30 bis 55 mm, aufweist.

4. Verfahren nach einem der Ansprüche 1 bis 3, **dadurch gekennzeichnet, dass** zwischen den Kontaktrohren (2) und den Umlenkblechen (6) Spalte (8) von 0,1 bis 0,6 mm, bevorzugt von 0,2 bis 0,3 mm, vorhanden sind und dass die Umlenkbleche (6) an der Reaktorinnenwand mit Ausnahme der Bereiche der Durchtrittsöffnungen (7) flüssigkeitsdicht befestigt sind.

5. Verfahren nach einem der Ansprüche 1 bis 4, **dadurch gekennzeichnet, dass** die Umlenkbleche eine Dicke im Bereich von 8 bis 30 mm, bevorzugt von 10 bis 20 mm, aufweisen.

6. Verfahren nach einem der Ansprüche 1 bis 5, **dadurch gekennzeichnet, dass** in den Rohrböden (3) Entlüftngs- und/oder Ablaufbohrungen (9), ein Kompensator (10) im Reaktormantel und für die Zu- und Abführung des Wärmetauschmittels am Reaktormantel Stutzen oder Teilringkanäle (11) vorgesehen sind, die Öffnungen zum Reaktorinnenraum bevorzugt mit kreisförmigem oder rechteckigem Querschnitt und mit einem Öffnungsverhältnis im Bereich von 5 bis 50 %, aufweisen.

7. Verfahren nach einem der Ansprüche 1 bis 6, **dadurch gekennzeichnet, dass** der Reaktor (die Reaktoren) (1) in Bezug auf eine Querschnittsebene in der Reaktormitte symmetrisch aufgebaut ist (sind).

8. Verfahren nach einem der Ansprüche 1 bis 7, **dadurch gekennzeichnet, dass** der Reaktor (die Reaktoren) (1) mehrzonig, insbesondere zwei- oder dreizonig, ausgebildet ist (sind), wobei die einzelnen Zonen gegeneinander durch Trennbleche (14) flüssigkeitsdicht getrennt sind, dergestalt, dass das Wärmetauschmittel innerhalb des Reaktors (der Reaktoren) (1) nicht aus einer Zone in die andere strömen kann.

9. Verfahren nach einem der Ansprüche 1 bis 10, **dadurch gekennzeichnet, dass** in mindestens einem der Kontaktrohre (2) eine Hülse (17) angeordnet ist zur Aufnahme eines Multi-Thermoelementes (18) mit zwei oder mehreren Temperaturmesspunkten, die unterhalb des Reaktors (1) mündet.

10. Verfahren nach einem der Ansprüche 1 bis 9, **dadurch gekennzeichnet dass** das Verfahren in zwei oder mehreren Reaktoren (1) hintereinander geschalteten Reaktoren (1) durchführt wird, wobei bevorzugt im Verbindungsteil zwischen der unteren Haube des oberen Reaktors und der oberen Haube des unteren Reaktors eine Konzentrationsmessstelle (19) für den Rest-Chlorgehalt und/oder eine Temperaturmessstelle (20) vorgesehen ist.

11. Verfahren nach Anspruch 10, **dadurch gekennzeichnet, dass** man das Verfahren in hintereinander geschalteten Reaktoren (1) durchführt und dass der zweite Reaktor Kontaktrohre (2) mit größerem Rohrinnendurchmesser gegenüber dem ersten Reaktor (1) aufweist, insbesondere mit einem Rohrinnendurchmesser im Bereich von 20 bis 110 mm, bevorzugt im Bereich von 60 bis 90 mm, dass die Reaktoren (1) unter Verzicht auf dazwischen angeordnete Hauben (4) unmittelbar hintereinander geschaltet sind und dass zwischen den Reaktoren (1) Distanzhalter (16) vorgesehen sind.

12. Verfahren nach einem der Ansprüche bis 11, **dadurch gekennzeichnet, dass** der Reaktor (die Reaktoren) (1) von einer Sicherheitskammer umschlossen ist (sind).

13. Verfahren nach einem der Anspruche 10 bis 12, **dadurch gekennzeichnet, dass** der zweite und/oder die weiteren Reaktoren (1) gegenüber dem davor angeordneten Reaktor (1) ein kleineres Außenmaß aufweisen.

14. Verfahren nach einem der Ansprüche 1 bis 13, **dadurch gekennzeichnet, dass** man als Wärmetauschmittel Wasser, wässrige Natriumhydroxidlösung, oder ein oder mehrere, bevorzugt chlorierte Kohlenwasserstoffe, insbesondere Monochlorbenzol, einsetzt und dass man das gasförmige Reaktionsgemisch und das flüssige Warmetauschmittel im Kreuzgegenstrom oder im Kreuzgleichstrom durch den Reaktor (1) leitet.

15. Verfahren nach einem der Ansprüche 1 bis 14, **dadurch gekennzeichnet, dass** man Kohlenmonoxid und Chlor in einem Molverhältnis im Bereich von 1,01 bis 1,10, bevorzugt im Bereich von 1,03 bis 1,06, von oben oder von unten durch die Kontaktrohre(2) leitet, wobei die Längsachse des Reaktors (1) vertikal ausgerichtet ist

16. Verfahren nach einem der Ansprüche 1 bis 15, **dadurch gekennzeichnet, dass** der in die Kontaktrohre (2) eingebrachte Feststoffkatalysator Aktivkohle ist oder ein zumindest teilweise offenporiger Kohlefstoffschaum; bevorzugt in Form von Kugeln, Kegeln, Zylindern, Stränglingen, Ringen oder Tabletten, und dass bevorzugt der der Zuführung des gasförmigen Reaktionsgemisches zugewandte Bereich der Kontaktrohre (2) auf eine Länge von 5 bis 20 % bevorzugt auf eine Länge von 3 bis 10 % der Gesamtlänge der Kontaktrohre (2) mit einem Inertmaterial befüllt ist.

17. Verfahren nach einem der Ansprüche 1 bis 16, **dadurch gekennzeichnet, dass** man die Kontaktrohre (2) in der Weise auslegt, dass ihr wärmetauschmittelseitiger Wärmeübergangskoeffizient im Bereich von 500 bis 2000 W/m²/K, bevorzugt im Bereich von 1000 bis 1500 W/m²/K, liegt.

## Claims

1. A process for preparing phosgene by gas-phase reaction of carbon monoxide and chlorine in the presence of a solid catalyst in one or more cylindrical reactors (1) which has/have a bundle of parallel catalyst tubes (2) which are aligned in the longitudinal direction of the reactor and whose ends are fixed in tube plates (3), with a cap (4) at each end of the reactor (1) and deflection plates (6) which are aligned perpendicular to the longitudinal direction of the reactor in the intermediate space (5) between the catalyst tubes (2) and leave free passages (7) located alternately opposite one another on the interior wall of the reactor, with the catalyst tubes (2) being charged with the solid catalyst, the gaseous reaction mixture being passed from one end of the reactor via one cap (4) through the catalyst tubes (2) and being taken off from the opposite end of the reactor (1) via the second cap (4) and a liquid heat transfer medium being passed through the intermediate space (5) around the catalyst tubes (2), wherein the reactor (the reactors) (1) for carrying out the process has/have no tubes in the region of the passages (7) .

2. A process as claimed in claim 1, wherein the deflection plates (6) are configured as segments of a circle, all deflection plates (6) each leave equal-sized passages (7) free and the area of each passage (7) is from 5 to 20%, preferably from 8 to 14%, of the cross section of the reactor.

3. A process as claimed in claim 1 or 2, wherein from 100 to 10 000, preferably from 1000 to 3500, catalyst tubes (2) are present and each catalyst tube (2) has a length in the range from 1.5 to 6.0 m, preferably in the range from 2.0 to 3.5 m, and a wall thickness in the range from 2.0 to 4.0 mm, in particular from 2.5 to 3.0 mm, and an internal diameter in the range from 20 to 90 mm, preferably in the range from 30 to 55 mm.

4. A process as claimed in any of claims 1 to 3, wherein gaps (8) of from 0.1 to 0.6 mm, preferably from 0.2 to 0.3 mm, are present between the catalyst tubes (2) and the deflection plates (6) are fixed in a liquid-tight manner to the interior wall of the reactor with the exception of the regions of the passages (7).

5. A process as claimed in any of claims 1 to 4, wherein the deflection plates have a thickness in the range from 8 to 30 mm, preferably from 10 to 20 mm.

6. A process as claimed in any of claims 1 to 5, wherein vent and/or discharge holes (9) are provided in the tube plates (3), a compensator (10) is provided in the reactor wall and ports or part-ring channels (11) are provided on the reactor wall for the introduction and discharge of the heat transfer medium and the openings of these ports or part-ring channels (11) to the interior of the reactor preferably have a circular or rectangular cross section and an opening ratio in the range from 5 to 50%.

7. A process as claimed in any of claims 1 to 6, wherein the reactor (reactors) is (are) constructed symmetrically about a cross-sectional plane in the middle of the reactor.

8. A process as claimed in any of claims 1 to 7, wherein the reactor (the reactors) (1) has (have) a plurality of zones, in particular two or three zones, with the individual zones being separated from one another in a liquid-tight manner by dividing plates (14) so that the heat transfer medium cannot flow from one zone into the other within the reactor (the reactors) (1).

9. A process as claimed in any of claims 1 to 8, wherein a sheath (17) for accommodating a multithermocouple (19) with two or more temperature measuring points, which opens out below the reactor (1), is provided in at least one of the catalyst tubes (2).

10. A process as claimed in any of claims 1 to 9 which is carried out in two or more reactors (1) connected in series, with a concentration measuring point (19) for the residual chlorine content and/or a temperature measuring point (20) preferably being provided in the connecting piece between the lower cap of the upper reactor and the upper cap of the lower reactor.

11. A process as claimed in claim 10 which is carried out in reactors (1) connected in series, wherein the second reactor has catalyst tubes (2) having a greater internal tube diameter compared to the first reactor (1), in particular an internal tube diameter in the range from 20 to 110 mm, preferably in the range from 60 to 90 mm, the reactors (1) are connected directly in series without caps (4) located in between and spacers (16) are provided between the reactors (1).

12. A process as claimed in any of claims 1 to 11, wherein the reactor (the reactors) (1) is (are) enclosed by a safety chamber.

13. A process as claimed in any of claims 10 to 12, wherein the second and/or further reactors (1) has/have a smaller external dimension than the upstream reactor (1).

14. A process as claimed in any of claims 1 to 13, wherein water, aqueous sodium hydroxide solution or one or more, preferably chlorinated hydrocarbons, in particular monochlorobenzene, is used as heat transfer medium and the gaseous reaction mixture and the liquid heat transfer medium are passed through the reactor (1) in cross-countercurrent or in cross-cocurrent.

15. A process as claimed in any of claims 1 to 14, wherein carbon monoxide and chlorine are passed in a molar ratio in the range from 1.01 to 1.10, preferably in the range from 1.03 to 1.06, from above or from below through the catalyst tubes (2) and the longitudinal axis of the reactor (1) is vertical.

16. A process as claimed in any of claims 1 to 15, wherein the solid catalyst installed in the catalyst tubes (2) is activated carbon or an at least partially open-pored carbon foam, preferably in the form of spheres, cones, cylinders, extrudates, rings or pellets, and the region of the catalyst tubes (2) at the end at which the gaseous reaction mixture is fed in is preferably filled with an inert material to a length of from 5 to 20%, preferably a length of from 3 to 10%, of the total length of the catalyst tubes (2).

17. A process as set forth in any of claims 1 to 16, wherein the catalyst tubes (2) have a heat transfer coefficient on the heat transfer medium side in the range from 500 to 2000 W/m²/K, preferably in the range from 1000 to 1500 W/m²/K.

## Revendications

1. Procédé de production de phosgène par réaction en phase gazeuse de monoxyde de carbone et de chlore en présence d'un catalyseur solide, dans un ou plusieurs réacteur(s) de forme cylindrique (1), comportant un faisceau de tubes de contact (2) agencés parallèlement entre eux dans la direction longitudinale du réacteur, et qui sont fixés à leurs extrémités dans des plateaux à tubes (3), avec à chaque fois une calotte (4) aux deux extrémités du réacteur (1), ainsi qu'avec des déflecteurs (6) agencés perpendiculairement à la direction longitudinale du réacteur dans l'espace intermédiaire (5) entre les tubes de contact (2), lesquels libèrent des ouvertures de passage (7) alternativement opposées et situées à la paroi intérieure du réacteur, les tubes de contact (2) étant remplis du catalyseur solide, le mélange réactionnel gazeux étant guidé depuis une extrémité du réacteur et via une calotte (4) dans les tubes de contact (2) et soutiré à l'extrémité opposée du réacteur via la deuxième calotte (4), et un milieu d'échange de chaleur liquide étant guidé dans l'espace intermédiaire (5) autour des tubes de contact (2), **caractérisé en ce que** le ou les réacteur(s) (1) utilisé(s) pour l'exécution du procédé ne comporte(nt) pas de tubes dans la région des ouvertures de passage (7).

2. Procédé selon la revendication 1, **caractérisé en ce que** les déflecteurs (6) sont configurés en segments de cercle, que tous les déflecteurs (6) libèrent à chaque fois des ouvertures de passage (7) identiques et que la surface de chaque ouverture de passage (7) représente à chaque fois de 5 à 20%, de préférence de 8 à 14% de la section transversale du réacteur.

3. Procédé selon la revendication 1 ou 2, **caractérisé par** un nombre de 100 à 10 000, de préférence de 1 000 à 3 500 tubes de contact (2), chaque tube de contact (2) présentant une longueur de l'ordre de 1,5 à 6,0 m, de préférence de l'ordre de 2,0 à 3,5 m, et une épaisseur de paroi de l'ordre de 2,0 à 4,0 mm, en particulier de 2,5 à 3,0 mm et un diamètre intérieur de tube de l'ordre de 20 à 90 mm, de préférence de l'ordre de 30 à 55 mm.

4. Procédé selon l'une quelconque des revendications 1 à 3, **caractérisé en ce que**, entre les tubes de contact (2) et les déflecteurs (6), il existe des interstices (8) de 0,1 à 0,6 mm, de préférence de 0,2 à 0,3 mm, et que les déflecteurs (6) sont fixés à la paroi intérieure du réacteur de manière étanche aux liquides, sauf dans les régions des ouvertures de passage (7).

5. Procédé selon l'une quelconque des revendications 1 à 4, **caractérisé en ce que** les déflecteurs présentent une épaisseur de l'ordre de 8 à 30 mm, de préférence de 10 à 20 mm.

6. Procédé selon l'une quelconque des revendications 1 à 5, **caractérisé en ce que** dans les plateaux à tubes (3) sont prévus des alésages de désaération et/ou d'écoulement (9), un compensateur (10) dans le manteau du réacteur et des buselures ou des canaux partiellement annulaires (11) pour l'entrée et la sortie du milieu d'échange de chaleur dans le manteau du réacteur, qui présentent des ouvertures vers l'espace intérieur du réacteur avec de préférence une section transversale circulaire ou quadrangulaire et une proportion d'ouvertures de l'ordre de 5 à 50%.

7. Procédé selon l'une quelconque des revendications 1 à 6, **caractérisé en ce que** le ou les réacteur(s) (1) est ou sont construit(s) de manière symétrique quant à un plan de section transversale au centre du réacteur.

8. Procédé selon l'une quelconque des revendications 1 à 7, **caractérisé en ce que** le ou les réacteur(s) (1) est (sont) configuré(s) en plusieurs zones, en particulier deux ou trois zones, les zones individuelles étant séparées entre elles de manière étanche aux liquides par des tôles de séparation (14), de manière à ce que le milieu d'échange de chaleur ne puisse pas, au sein du ou des réacteur(s) (1), passer d'une zone dans l'autre.

9. Procédé selon l'une quelconque des revendications 1 à 8, **caractérisé en ce que**, dans au moins l'un des tubes de contact (2) est placé un manchon (17) destiné à recevoir un thermocouple multipoint (18) comportant deux ou plus de deux points de mesure de température, qui débouche sous le réacteur (1).

10. Procédé selon l'une quelconque des revendications 1 à 9, **caractérisé en ce que** le procédé est entrepris dans deux ou plus de deux réacteurs (1) reliés en série, et qu'il est de préférence prévu, dans la partie de raccordement entre la calotte inférieure du réacteur supérieur et la calotte supérieure du réacteur inférieur, un point de mesure de concentration (19) pour la teneur résiduelle en chlore et/ou un point de mesure de température (20).

11. Procédé selon la revendication 10, **caractérisé en ce que** l'on entreprend le procédé dans des réacteurs (1) reliés en série et que le deuxième réacteur présente des tubes de contact (2) d'un plus grand diamètre intérieur de tubes que dans le premier réacteur (1), en particulier un diamètre intérieur des tubes de l'ordre de 20 à 110 mm, de préférence de l'ordre de 60 à 90 mm, que les réacteurs (1) sont directement reliés en série sans calottes (4) agencées entre eux et que des espaceurs (16) sont prévus entre les réacteurs.

12. Procédé selon l'une quelconque des revendications 1 à 11, **caractérisé en ce que** le ou les réacteur(s) est (sont) entouré(s) d'une enceinte de sécurité.

13. Procédé selon l'une quelconque des revendications 10 à 12, **caractérisé en ce que** le deuxième et/ou les autres réacteurs présentent une dimension extérieure inférieure à celle du réacteur (1) précédent.

14. Procédé selon l'une quelconque des revendications 1 à 13, **caractérisé en ce que** l'on met en oeuvre en tant que milieu d'échange de chaleur de l'eau, une solution aqueuse d'hydroxyde de sodium, ou bien un ou plusieurs hydrocarbures, de préférence chlorés, en particulier du monochlorobenzène, et que l'on guide le mélange réactionnel gazeux et le milieu d'échange de chaleur liquide en contre-courant croisé ou en courants parallèles croisés dans le réacteur (1).

15. Procédé selon l'une quelconque des revendications 1 à 14, **caractérisé en ce que** l'on guide du monoxyde de carbone et du chlore, en une proportion molaire de l'ordre de 1,01 à 1,10, de préférence de l'ordre de 1,03 à 1,06, depuis le haut ou depuis le bas dans les tubes de contact (2), l'axe longitudinal du réacteur (1) étant orienté verticalement.

16. Procédé selon l'une quelconque des revendications 1 à 15, **caractérisé en ce que** le catalyseur solide introduit dans les tubes de contact (2) est du charbon actif ou une mousse de carbone au moins partiellement à pores ouverts, de préférence sous la forme de billes, de cônes, de cylindres, de boudins, d'anneaux ou de pastilles, et que de préférence la zone des tubes de contact (2) tournée vers l'amenée du mélange réactionnel gazeux est remplie, sur une longueur de 5 à 20%, de préférence sur une longueur de 3 à 10% de la longueur totale des tubes de contact (2), d'un matériau inerte.

17. Procédé selon l'une quelconque des revendications 1 à 16, **caractérisé en ce que** les tubes de contact (2) sont dimensionnés de manière à ce que leur coefficient de transfert de chaleur du côté du milieu d'échange de chaleur est de l'ordre de 500 à 2 000 W/m² /K, de préférence de l'ordre de 1 000 à 1 500 W/m²/K.
